# FASCICULE DE BREVET EUROPEEN

(11) **EP 1 198 647 B1**
(45) Date de publication et mention de la délivrance du brevet: **31.03.2004**
(21) Numéro de dépôt: 00945513.0
(22) Date de dépôt: 24.07.2000
(51) Int. Cl.: E04B 1/02, E04B 1/14

(54) **CONSTRUCTION PREFABRIQUEE DEMONTABLE, NOTAMMENT MAISON D'HABITATION, ET UN PROCEDE POUR SA FABRICATION**
DEMONTIERBARES BAUWERK IN FERTIGBAUWEISE, INSBESONDERE EINE WOHNUNG UND EIN VERFAHREN FÜR DESSEN KONSTRUKTION
DISMOUNTABLE PREFABRICATED STRUCTURE, IN PARTICULAR FOR A HOUSE, AND METHOD FOR MAKING SAME

(30) Priorité: 27.07.1999 CH 138299
(43) Date de publication de la demande: 24.04.2002
(73) Titulaire: Morel, Jean-Louis, 1618 Châtel-St-Denis (CH)
(72) Inventeur: Morel, Jean-Louis, 1618 Châtel-St-Denis (CH)
(86) Numéro de dépôt international: PCT/CH2000/000403
(87) Numéro de publication internationale: WO 2001/007725

(56) Documents cités:
- DE-A- 3 942 244
- GB-A- 2 275 944
- US-A- 3 665 664
- US-A- 5 372 678

## Description

L'invention a pour objet une construction préfabriquée démontable, notamment maison d'habitation, comportant des panneaux sandwich préfabriqués, des poteaux et des traverses, tous ces éléments étant modulaires, et un procédé pour sa fabrication.

On connaît actuellement beaucoup de constructions préfabriquées comportant des panneaux sandwich, des poteaux et des traverses, par exemple :

Dans le brevet DE-A-19807914, il est décrit un élément sandwich préfabriqué pour la construction de bâtiments. Cet élément est formé de deux plaques constituant ses faces extérieures entre lesquelles est coulé un béton léger, de densité comprise entre 360 kg/m3 et 790 kg/m3. La construction d'un bâtiment est faite avec des éléments ayant la hauteur d'un étage, par conséquent ces éléments sont trop lourds pour être maniés sans engin de levage. Ces éléments sont posés les uns à côté des autres avec des éléments verticaux, disposés entre eux. La stabilité de la construction est assurée par le faite que les éléments sont vissés sur les poteaux. Cette invention a pour but d'apporter un gain de temps lors de l'édification du bâtiment.

Dans le brevet US-A-3203145, il est décrit une maison préfabriquée modulaire. On entend par modulaire le fait de présenter un ensemble d'éléments ayant des dimensions standards permettant de construire différents bâtiments. Dans ce document la maison est constituée d'une ossature métallique sur laquelle on viendra fixer des panneaux sandwich. Cette construction nécessite aussi l'intervention de spécialistes utilisant des engins de levage, notamment pour ériger l'ossature.

Dans le brevet US-A-4852310, il est décrit une construction, comportant des moyens d'isolation, réalisée avec des panneaux sandwich préfabriqués. Cette construction n'est pas conçue pour être démontée et est suffisamment compliquée à réaliser pour nécessiter l'intervention de spécialistes.

Dans toutes les constructions préfabriquées connues à l'heure actuelle il est nécessaire de faire appel à des spécialistes et d'avoir recourt à des engins de levage. Dans aucun des cas connus, il est décrit une construction modulaire démontable réalisée par un homme seul sans l'aide d'engin de levage.

En effet, un des buts de l'invention est de fournir une construction constituée d'éléments simples légers permettant à un homme seul de la construire facilement, sans recourt ni à des moyens de levage, ni à des moyens d'assemblage compliqués.

Un autre but de la présente invention est de fournir une construction bon marché tout en étant bien isolée thermiquement avec des matériaux biodégradables.

Un troisième but est de fournir une construction ayant des murs extérieurs permettant la migration de l'humidité intérieure vers l'extérieure, en d'autres termes de fournir une construction ayant des murs présentant une certaine porosité en évitant d'employer des matériaux complètement étanches, c'est-à-dire des matériaux non poreux, qui ne permettrait pas cette migration, par exemple : de la perlite-possière et des déchets de panneaux de fibro silicate-tourbe.

Un quatrième but est de fournir une construction ne comportant ni colle, ni mortier, qui puisse être montée et démontée rapidement sans endommager les éléments, afin de pouvoir être utilisée dans les cas de constructions provisoires, par exemple, lors de manifestations sportives, de catastrophes naturelles ou en temps de guerre.

Ces buts sont atteints avec la construction préfabriquée démontable, selon l'invention, notamment maison d'habitation, comportant des panneaux sandwich préfabriqués, des poteaux et des traverses, tous ces éléments étant modulaires, caractérisée en ce que les panneaux sandwich sont constitués de deux plaques rectangulaires de hauteur comprise entre 0,7 m et 3,5 m en un matériau à base d'hydrosilicate et de cellulose de conifères ayant une masse spécifique égale ou inférieure à 350 kg/m3 et d'épaisseur comprise entre 3 cm et 5 cm, maintenues écartées par deux entretoises horizontales et une verticale disposées au moins sur trois côtés des plaques à une certaine distance des bords de ces dernières de manière à constituer un caisson intérieur et une gorge extérieure sur au moins trois côtés du panneau et par une quatrième entretoise disposée, soit en retrait de manière à constituer une gorge semblable à celle des autres côtés, soit en protubérance de manière à constituer un poteau, et en ce que ledit caisson est rempli de matière isolante, la stabilité de la construction assurée par des traverses et/ou des tirants en tension maintenant les panneaux serrés en place, et la forme de la construction définie par des pièces d'angle préfabriquées.

La construction selon l'invention fournit une construction comprise entre les constructions faites d'éléments préfabriqués, telles les briques ou les plots de ciment, et les constructions faites d'éléments préfabriqués lourds, tels des panneaux préfabriqués. En effet, une construction selon l'invention présente les avantages des deux types de construction sans en présenter les inconvénients. C'est-à-dire elle peut être construite par un homme seul, mais beaucoup plus rapidement que les constructions en briques ou en plots de ciment et ne nécessite aucun engin de levage comme les constructions préfabriquées lourdes.

L'invention a aussi pour but de fournir un procédé de construction d'une telle construction, caractérisé en ce qu'on construit une plate-forme ayant sensiblement la surface inférieure de la construction, on dispose sur cette plate-forme une première pièce d'angle, puis on place deux filières dans la pièce d'angle que l'on fixe sur la plate-forme, ensuite on place un premier poteau ayant une hauteur telle qu'il vienne à fleur avec le fond de la gorge prévue dans l'angle de la pièce d'angle, ainsi que deux poteaux sensiblement de même hauteur dans les espaces prévus dans la pièce d'angle, enfin on place deux panneaux sandwich de part et d'autre de la pièce d'angle de manière à enfermer les deux derniers poteaux posés, ce qui constituera le départ de deux murs, on répète ces dernières opérations de manière à constituer un rang de panneaux, ceci jusqu'à que l'on arrive soit sur un autre angle de la construction, soit sur un poteau constituant le cadre d'une porte ou d'une fenêtre, alors on dispose une première traverse dans la gorge prévue à la partie supérieure des panneaux sandwich constituant le premier mur et on fait de même pour le second mur, les deux traverses étant assemblées au moyen d'une pièce prévue à cet effet dans le poteau disposé dans l'angle de la pièce d'angle ; une fois le deuxième rang de panneaux sandwich placé, on commencera à tendre la traverse au moyen de boulons ; toutes ces opérations seront répétées jusqu'à ce que l'ensemble de la construction soit terminé.

L'invention sera mieux comprise et ses caractéristiques et ses avantages apparaîtront plus clairement à la lecture de la description de formes d'exécutions données à titre d'exemple uniquement en regard des dessins sur lesquels :
La figure 1 représente une vue schématique d'une façade pignon d'une construction selon l'invention,
La figure 2 représente une vue schématique de l'ossature de la façade représentée à la figure 1,
La figure 3a représente une vue en perspective d'un élément sandwich,
La figure 3b représente une vue en perspective d'une autre réalisation d'un élément. sandwich
La figure 4 représente une vue schématique en plan d'une pièce d'angle,
La figure 5 représente la pièce d'angle de la figure 4 après que les traverses ont été posées,
La figure 6 représente schématiquement une série d'éléments modulaires.

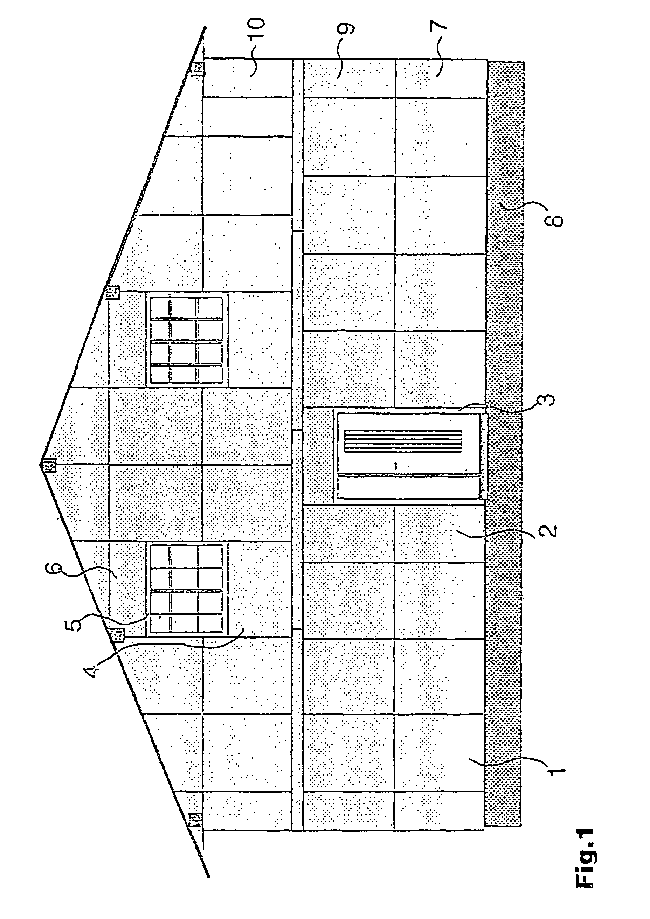

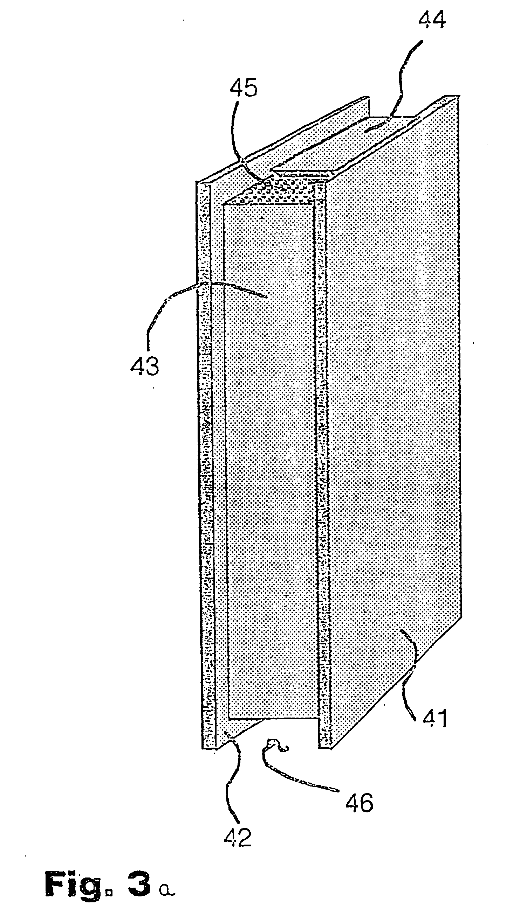

Comme on peut le voir sur la figure 1 une façade pignon d'une construction selon l'invention comportera des panneaux standard rectangulaires 1, dont les dimensions dans le cas présent sont 1 m x 1,25 m et d'épaisseur 4 cm pour les plaques extérieures 41, 42 représentées sur la figure 3a. Les deux plaques seront maintenues écartées par des entretoises 43, 44, en un matériau à base d'hydrosilicate et de cellulose de conifères ayant une masse spécifique égale ou inférieure à 350 kg/M3 identique à celui desdites plaques ou en bois, à une distance de 12 cm, Les entretoises seront placées en retrait des bords à une distance de 6 cm, de manière à constituer une gorge 46 (voir figure 3a) de 6 cm de profondeur et de 12 cm de largeur sur tout le pourtour du panneau. Les plaques extérieures 41,42 seront par exemple en « THERMOSIL » (marque déposée), qui est un produit à base d'hydrosilicates et de cellulose de conifères de masse spécifique égale ou inférieure à 350 kg/m3 et est biodégradable.

Le caisson constitué par les plaques et les entretoises sera rempli de matière isolante 45, par exemple de mortier de sable volcanique expansé, par exemple de la « PERLITE » (marque déposée), avec des granulats de « THERMOSIL ». Un panneau ayant les dimensions définies ci-dessus pèsera au maximum 50 kg, ce qui permettra de le manoeuvrer sans engin de levage.

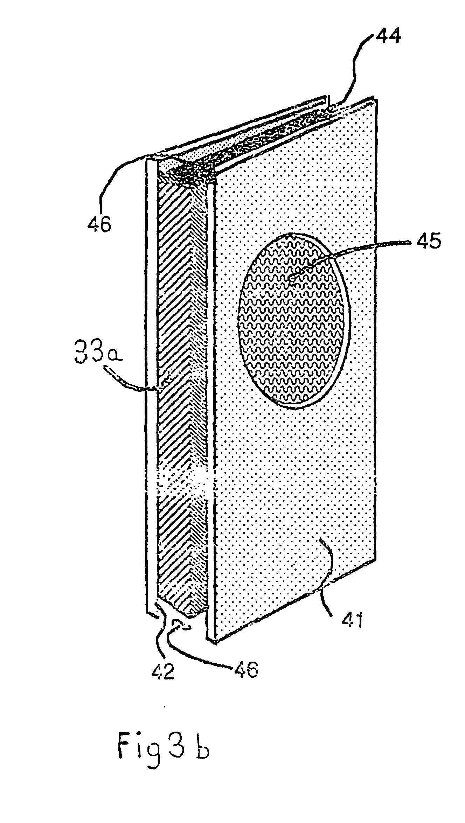

On a représenté sur la figure 3b une variante du panneau représenté à la figure 3a, avec les mêmes signes de référence pour les mêmes caractéristiques. Cette variante se différencie de celle de la figure 3a par le fait que le panneau comporte trois gorges, une supérieure, une inférieure et une verticale. La quatrième gorge étant remplacée par un élément 33a, qui servira de poteau une fois que le panneau aura été mis en place et qui viendra se placer dans la gorge du panneau adjacent.

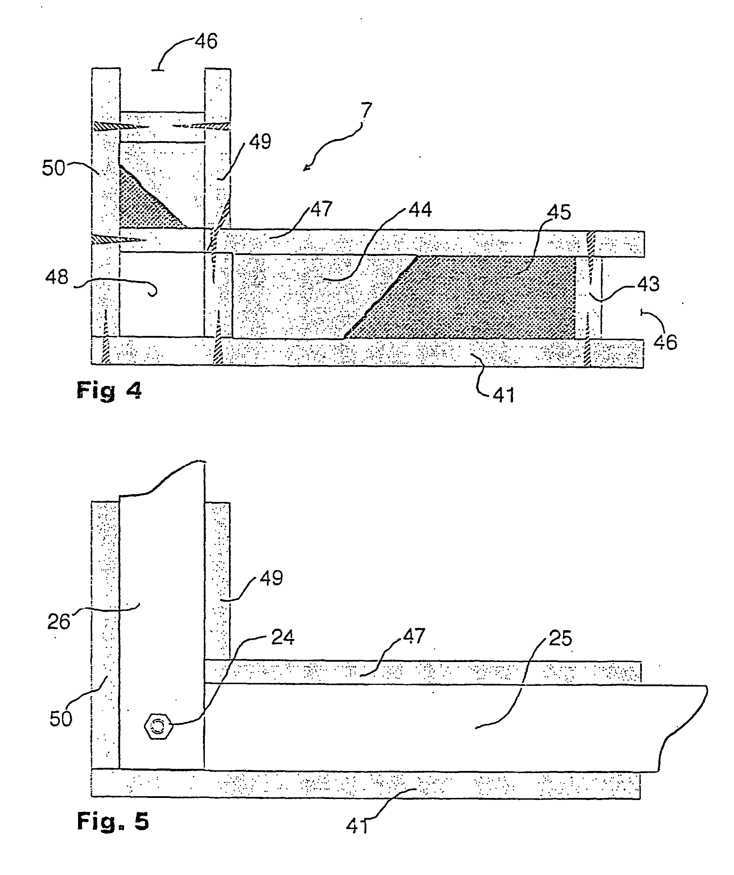

La façade comporte aussi des pièces d'angle 7, voir figures 4 et 5. Comme on le voit sur la figure 4 une pièce d'angle présente une première plaque 41 identique à une des plaques constituant un panneau standard et une deuxième plaque 47 de même hauteur mais de largeur 4 cm plus petite, c'est-à-dire d'une épaisseur de panneau. La plaque 47 est disposée parallèlement à la plaque 41 à une distance de 12 cm est maintenue dans cette position par des entretoises 43 de manière à créer une gorge 46 à l'extrémité du panneau. A l'autre extrémité de la plaque est disposé à angle droit une plaque 50 de même hauteur et de largeur égale à la moitié moins 4 cm dans la forme d'exécution décrite, de celle d'un panneau standard. Une quatrième plaque 49 est disposée parallèlement à la plaque 50 à 12 cm de manière à créer un départ de panneau avec une gorge 46. Cette disposition fait apparaître un vide de section carrée de 12 cm de côté dans l'angle.

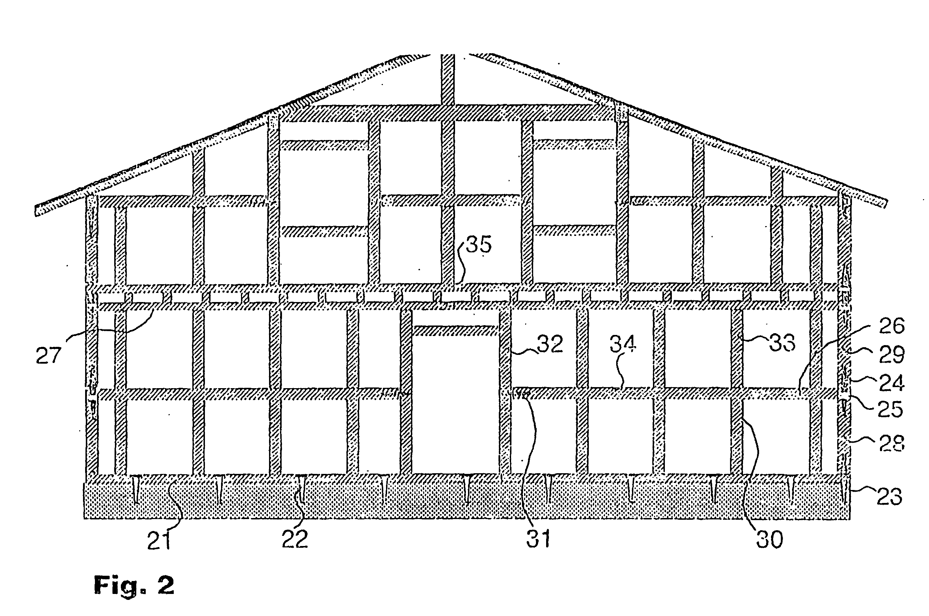

La construction sera réalisée sur une plate-forme 8 construite auparavant en bois ou en béton. On commencera par poser une pièce d'angle par exemple la pièce 7 ainsi qu'un élément de filière 21, voir figure 2, que l'on fixera sur la plate-forme au moyen de tire-fond 23. Puis on mettra le poteau 28 dans l'angle de la pièce d'angle et un poteau 30 dans la gorge de pièce d'angle et on viendra disposer un premier panneau sandwich standard contre la pièce d'angle. La hauteur des poteaux 28 et 30 est telle que, une fois les poteaux poser la partie supérieure des poteaux viennent à fleur avec le fond de la gorge supérieure des panneaux sandwich. Après quoi on mettra un poteau dans la gorge 46 du panneau sandwich et l'opération sera répétée jusqu'à ce l'on atteigne le poteau 32; qui aura une hauteur égale à la hauteur d'un étage.

L'opération décrite ci-dessus sera faite de la même manière sur la façade (non représentée) perpendiculaire à la façade pignon représentée aux figures 1 et 2. Lorsque le premier rang de panneaux sandwich sera posé sur les deux façades, on viendra placer une première traverse 26 dans la gorge supérieure des panneaux sandwich (voir aussi la figure 5) qui s'appuiera sur les poteaux 30 et on fera de même sur la façade perpendiculaire (non représentée) en plaçant la traverse 25. Les deux traverses 25 et 26 seront vissées ensembles sur le poteau 28 par un boulon 24 spéciale prévu à cet effet. On placera alors le boulon 31 que l'on ne serrera pas encore à fond, mais de manière suffisante pour maintenir le poteau 32 en place. On recommencera alors les mêmes opérations que précédemment, c'est-à-dire on place le poteau 29, qui sera vissé sur les deux traverses 25, 26 au moyen du boulon 24 et l'on disposera une deuxième pièce d'angle 9 sur la première pièce d'angle 7, et l'on mettra en les panneaux sandwich séparés par des poteaux 33. Une fois tous les panneaux et tous les poteaux en place on serrera le boulon 31, ce qui assurera la stabilité de ce bout de paroi. On recommencera en partant de l'angle de droite sur la figure 1. Une fois ce deuxième bout de paroi terminé il restera un espace entre les bouts de paroi dans lesquels on disposera un cadre 3 de porte. La largeur de l'espace est un multiple de la largeur d'un panneau, dans la forme décrite 5/4, c'est-à-dire 1,25 m. La traverse 34 sera tendue par un boulon 35 placé sensiblement en son milieu. Au-dessus de la porte on place en position couchée un panneau de largeur égale à un demi-panneau.

Le reste de la façade se fera de la même manière en plaçant toujours des panneaux ou des multiples ou sous multiples de panneaux, par exemple des panneaux 4 et 6 entourant une fenêtre 5.

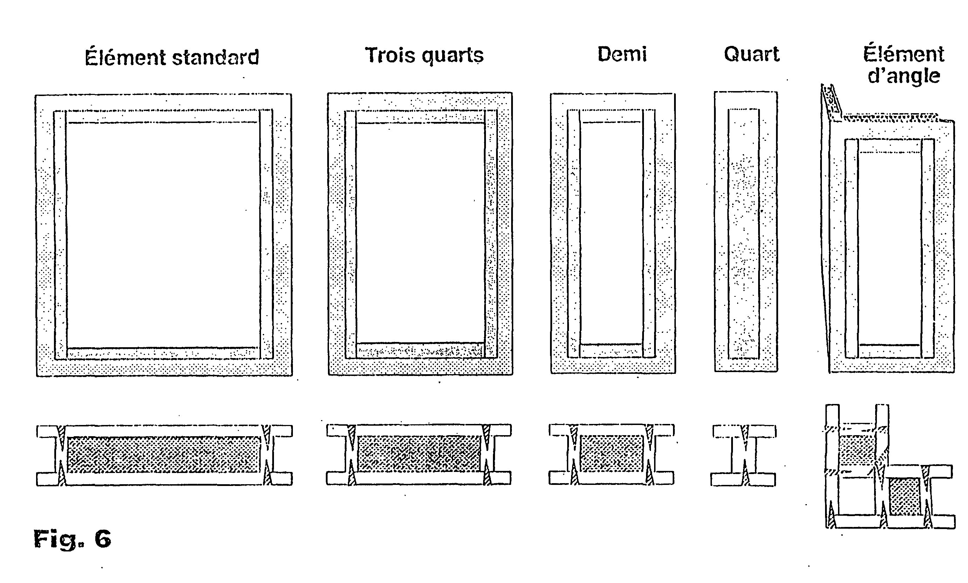

La figure 6 représente en coupe et en plan un ensemble de panneaux et de ses sous multiples, ainsi qu'une pièce d'angle, qui dans le cas représenté comporte deux demi-panneaux comme départ de parois.

Bien que la description qui précède se rapporte à une forme d'exécution préférée de réalisation de l'invention, des modifications peuvent y être apportées sans s'écarter de l'invention telle que décrite dans les revendications.

## Revendications

1. Construction préfabriquée démontable, notamment maison d'habitation, comportant des panneaux sandwich préfabriqués, des poteaux et des traverses, tous ces éléments étant modulaires, **caractérisée en ce que** les panneaux sandwich (1) sont constitués de deux plaques (41, 42) rectangulaires de hauteur comprise entre 0,7 m et 3,5 m en un matériau à base d'hydrosilicate et de cellulose de conifères ayant une masse spécifique égale ou inférieure à 350 kg/m3 et d'épaisseur comprise entre 3 cm et 5 cm, maintenues écartées par deux entretoises (43, 44) horizontales et une verticale disposées au moins sur trois côtés des plaques à une certaine distance des bords de ces dernières de manière à constituer un caisson intérieur et une gorge (46) extérieure sur au moins trois côtés du panneau et par une quatrième entretoise disposée, soit en retrait de manière à constituer une gorge semblable à celle des autres côtés, soit en protubérance de manière à constituer un poteau, et **en ce que** ledit caisson est rempli de matière isolante (45), la stabilité de la construction assurée par des traverses et/ou des tirants (25,26,34) en tension maintenant les panneaux serrés en place, et la forme de la construction définie par des pièces d'angle préfabriquées (7).

2. Construction selon la revendication 1, **caractérisée en ce que** les panneaux sandwich comprennent un panneau de base de forme rectangulaire et des panneaux ayant pour largeur les trois quarts, la moitié et le quart de la dimension du panneau de base en gardant la même hauteur que celle du panneau de base.

3. Construction selon la revendication 1 ou 2, **caractérisée en ce que** chaque rangée horizontale de panneaux comporte à sa partie supérieure une traverse et/ou un tirant horizontal continu tendu maintenant l'ensemble des panneaux serrés, et **en ce que** chaque panneau est séparé du suivant par un poteau de hauteur égale à la hauteur des entretoises verticales du panneau et disposé sous la traverse.

4. Construction selon l'une des revendications 1 à 3, **caractérisée en ce que** la matière isolante est un mortier de sable volcanique expansé mélangé à des granulats à base d'hydrosilicate et de cellulose de conifères.

5. Construction selon l'une des revendications 1 à 4, **caractérisée en ce que** chaque pièce d'angle est préfabriquée en usine et est constituée de deux plaques extérieures disposées à angle droit et deux plaques intérieures parallèles aux plaques extérieures en même matériau que celui des panneaux sandwich et écartées de la même distance que celles des panneaux sandwich par des entretoises laissant dans l'angle un espace vide prévu pour recevoir un poteau et comportant entre les plaques une matière isolante.

6. Construction selon l'une des revendications 1 à 5, **caractérisée en ce que** les poteaux et les traverses ont une section carrée ou rectangulaire et **en ce que** la distance des entretoises au bord des plaques est égale à la moitié du côté de la section carrée ou rectangulaire des traverses et des poteaux et l'intervalle entre les plaques est égale au côté de ladite section carrée ou rectangulaire.

7. Construction selon l'une des revendications 1 à 6, **caractérisée en ce que** les poteaux et les traverses sont en bois plein ou lamellé collé, et les entretoises des panneaux sont en un matériau à base d'hydrosilicate et de cellulose de conifères ayant une masse spécifique égale ou inférieure à 350 kg/M3 identique à celui desdites plaques, en bois ou en métal.

8. Construction selon l'une des revendications 1 à 6, **caractérisée en ce que** les poteaux et les traverses et/ou tirants sont en métal, en béton armé léger ou matière plastique, par exemple : du chlorure de polyvinyle, et les entretoises des panneaux sont en bois ou en un matériau à base d'hydrosilicate et de cellulose de conifères ayant une masse spécifique égale ou inférieure à 350 kg/M3 identique à celui desdites plaques.

9. Construction selon l'une des revendications 2 à 8, **caractérisée en ce qu'**elle comporte des cadres de fenêtres et de portes ayant des dimensions modulaires relativement aux panneaux, aux poteaux et aux traverses, c'est-à-dire leur largeur est un multiple de la largeur du panneau de base.

10. Procédé de fabrication d'une construction selon l'une des revendications précédentes, **caractérisé en ce qu'**on construit une plate-forme ayant sensiblement la surface inférieure de la construction, on dispose sur cette plate-forme une première pièce d'angle, puis on place deux filières dans la pièce d'angle que l'on fixe sur la plate-forme, ensuite on place un premier poteau ayant une hauteur telle qu'il vienne à fleur avec le fond de la gorge prévue dans l'angle de la pièce d'angle, ainsi que deux poteaux sensiblement de même hauteur dans les espaces prévus dans la pièce d'angle, enfin on place deux panneaux sandwich de part et d'autre de la pièce d'angle de manière à enfermer les deux derniers poteaux posés, ce qui constituera le départ de deux murs, on répète ces dernières opérations de manière à constituer un rang de panneaux, ceci jusqu'à que l'on arrive soit sur un autre angle de la construction, soit sur un poteau constituant le cadre d'une porte ou d'une fenêtre, alors on dispose une première traverse dans la gorge prévue à la partie supérieure des panneaux sandwich constituant le premier mur et on fait de même pour le second mur, les deux traverses étant assemblées au moyen d'une pièce prévue à cet effet dans le poteau disposé dans l'angle de la pièce d'angle ; une fois le deuxième rang de panneaux sandwich placé, on commencera à tendre les traverses et/ou tirants; toutes ces opérations seront répétées jusqu'à ce que l'ensemble de la construction soit terminé.

11. Procédé selon la revendication 10, **caractérisé en ce que** la plate-forme est réalisée en bois, en béton ou en métal.

## Patentansprüche

1. Vorgefertigtes, demontierbares Bauwerk, insbesondere Wohnhaus, das vorgefertigte Sandwich-Tafeln, Pfosten und Traversen umfasst, wobei alle diese Elemente modular sind,
**dadurch gekennzeichnet,**
**dass** die Sandwich-Tafeln (1) aus zwei rechteckigen Platten (41, 42) mit einer Höhe zwischen 0,7 m und 3,5 m gebildet sind, die aus einem Material auf der Grundlage von Wasserglas (Hydrosilikat) und Zellulose von Nadelhölzem mit einer Dichte gleich oder kleiner als 35B kg/m3 bestehen, eine Dicke zwischen 3 cm und 5 cm haben und durch zwei horizontale Zwischenstücke (43, 44) und ein vertikales Zwischenstück auf Abstand gehalten werden, die zumindest auf drei Seiten der Platten in einem gewissen Abstand von deren Rändern so angeordnet sind, dass sie einen inneren Kasten und zumindest auf drei Seiten der Tafel eine äußere Hohlkehle (46) bilden, sowie durch ein viertes Zwischenstück, das entweder zurückgesetzt ist, um eine Hohlkehle entsprechend der der anderen Seiten zu bilden, oder vorsteht, um einen Pfosten zu bilden, und dass der Kasten mit isolierendem Material (45) gefüllt ist, dass die Stabilität des Bauwerks durch Traversen und/oder Zugelemente (25, 26, 34) unter Zugspannung sichergestellt ist, die die Tafeln in der Einbaulage verspannt halten, und dass die Gestalt des Bauwerks durch vorgefertigte Eckenstücke (7) bestimmt ist.

2. Bauwerk nach Anspruch 1, **dadurch gekennzeichnet, dass** die Sandwich-Tafeln eine Basis-Tafel von rechteckiger Form sowie Tafeln mit einer Breite von drei Viertel, der Hälfte und einem Viertel des Maßes der Basis-Tafel umfassen, wobei die gleiche Höhe wie die der Basis-Tafelbeibehalten ist.

3. Bauwerk nach Anspruch 1 oder 2, **dadurch gekennzeichnet, dass** jede horizontale Reihe von Tafeln an ihrem oberen Teil eine Traverse und/oder ein horizontal durchgehendes, gespanntes Zugelement enthält, das die Tafeln insgesamt verspannt hält, und dass jede Tafel von der folgenden durch einen Pfosten getrennt ist, dessen Höhe gleich der Höhe der vertikalen Zwischenstücke der Tafel ist und der unter der Traverse angeordnet ist.

4. Bauwerk nach einem der Ansprüche 1 bis 3, **dadurch gekennzeichnet, dass** das isolierende Material ein Mörtel aus expandiertem vulkanischem Sand ist, der mit Granulaten auf der Grundlage von Wasserglas (Hydrosilikat) und Zellulose von Nadelholz vermischt ist.

5. Bauwerk nach einem der Ansprüche 1 bis 4, **dadurch gekennzeichnet, dass** jedes Eckenstück werksseitig vorgefertigt ist und aus zwei äußeren, rechtwinklig zueinander stehenden Platten und aus zwei inneren, parallel zu den äußeren Platten liegenden Platten besteht, wobei die Platten aus dem gleichen Material bestehen wie die Sandwich-Tafeln und durch Zwischenstücke, die im Winkel einen freien Raum lassen, der dazu vorgesehen ist, einen Pfosten aufzunehmen, auf dem gleichen Abstand gehalten wie bei den Sandwich-Tafeln, wobei zwischen den Platten isolierendes Material enthalten ist.

6. Bauwerk nach einem der Ansprüche 1 bis 5, **dadurch gekennzeichnet, dass** die Pfosten und die Traversen einen quadratischen oder rechteckigen Querschnitt haben und dass der Abstand der Zwischenstücke zum Rand der Platten gleich der Hälfte der Seitenlänge des quadratischen oder rechteckigen Querschnitts der Traversen und der Pfosten ist und dass der Abstand zwischen den Platten gleich der Seitenlänge des genannten quadratischen oder rechteckigen Querschnitts ist.

7. Bauwerk nach einem der Ansprüche 1 bis 6, **dadurch gekennzeichnet, dass** die Pfosten und Traversen aus massivem oder lamelliertem und verleimtem Holz bestehen und dass die Zwischenstücke zwischen den Platten aus einem mit dem der genannten Platten identischen Material auf der Grundlage von Wasserglas (Hydrosilikat) und Zellulose von Nadelholz mit einer Dichte gleich oder kleiner als 350 kg/m3 bestehen oder aus Holz oder aus Metall.

8. Bauwerk nach einem der Ansprüchen 1 bis 6, **dadurch gekennzeichnet, dass** die Pfosten und die Traversen und/oder die Zugelemente aus Metall, aus armiertem leichtem Beton oder aus Kunststoffmaterial bestehen, z.B. Polivinylchlorid/PVC und dass die Zwischenstücke zwischen den Platten aus Holz oder aus einem mit dem der Platten identischen Material auf der Basis von Wasserglas und Zellulose von Nadelholz mit einer Dichte gleich oder kleiner als 350 kg/m3 bestehen.

9. Bauwerk nach einem der Ansprüche 2 bis 8, **dadurch gekennzeichnet, dass** es Rahmen für Fenster und Türen enthält, die bezüglich der Tafeln, der Pfosten und der Traversen modulare Abmessungen haben, d.h. dass ihre Breite ein modular Vielfaches der Breite der Basis-Tafel ist.

10. Verfahren zur Herstellung eines Bauwerkes nach einem der vorangehenden Ansprüche, **dadurch gekennzeichnet, dass** man eine Plattform baut, deren Fläche geringfügig kleiner ist als das Bauwerk, dass man auf dieser Plattform ein erstes Eckenstück aufstellt und dann zwei Anschlagleisten in dem Eckenstück anordnet, die man auf der Plattform befestigt, dass man dann einen ersten Pfosten mit einer solchen Höhe, dass er mit dem Grund der in dem Winkel des Eckenstückes vorgesehenen Hohlkehle abschließt, ebenso wie zwei Pfosten von ungefähr der gleichen Höhe in die in dem Eckenstück vorgesehenen Ausnehmungen einsetzt, dass man schließlich zwei Sandwich-Tafeln beiderseits des Eckenstückes so ansetzt, dass sie die letzteren zwei gesetzten Pfosten einschließen, was den Anfang für zwei Wände bildet, dass man diese letzteren Operationen wiederholt, um eine fortlaufende Reihe Tafeln zu bilden, bis man entweder zu einer anderen Ecke des Bauwerks oder zu einem Pfosten gelangt, der den Rahmen einer Tür oder eines Fensters bildet, dass man dann eine erste Traverse in die in dem oberen Teil der die erste Wand bildenden Sandwich-Tafeln gebildete Hohlkehle einlegt und in gleicher Weise vorgeht für die zweite Wand, wobei die beiden Traversen mittels eines Teils verbunden werden, das hierzu in dem Pfosten im Winkel des Eckenstückes vorgesehen ist, und dass man dann, wenn die zweite Reihe Sandwich-Platten steht, die Traversen und/oder Zugelemente zu spannen beginnt, wobei diese Arbeitsgänge wiederholt werden, bis das Bauwerk insgesamt fertiggestellt ist.

11. Verfahren nach Anspruch 10, **dadurch gekennzeichnet, dass** die Plattform in Holz, Beton oder Metall ausgeführt ist.

## Claims

1. Dismountable prefabricated structure, notably a dwelling, made of prefabricated sandwich panels, posts and crosspieces, all these elements being modular, **characterized in that** the sandwich panels (1) are comprised of two rectangular plates (41, 42) with height included between 0.7 m and 3.5 m made of a hydrosilicate and conifer cellulose base material having a specific mass equal to or less than 350 kg/m3 and thickness included between 3 cm and 5 cm, maintained separated by two horizontal struts (43, 44) and a vertical strut placed on at least three sides of the plates at a certain distance from their edges in order to constitute an interior case and an exterior groove (46) on at least three sides of the panel and by a fourth strut either set back from the edge to make a groove similar to the one of the other sides, or extending from it so as to make a post, and so that this case may be filled with an insulating material (45), the stability of the structure being ensured by crosspieces and/or ties (25,26,34) under tension maintaining the panels tightly in place, and the structural shape defined by prefabricated angle parts (7).

2. Structure in accordance with claim 1, **characterized in that** the sandwich panels include a base panel with rectangular shape and panels having for width the three fourths, half or quarter of the dimension of the base panel, keeping the same height as the base panel.

3. Structure in accordance with daim 1 or 2, **characterized in that** each horizontal row of panels has in its upper part a crosspiece or a tightened continuous horizontal tie maintaining the set of panels tight, and **in that** each panel is separated from the next by a post of height equal to the height of the vertical struts of the panel and placed under the crosspiece.

4. Structure in accordance with one of the claims 1 to 3, **characterized in that** the insulating material is an expanded volcanic sand mortar mixed with hydrosilicate and conifer cellulose base granulates.

5. Structure in accordance with one of the claims 1 to 4, **characterized in that** each angle part is prefabricated in the plant and made of two exterior plates placed at a right angle and two interior plates parallel to the exterior plates in the same material as the sandwich panels and separated by the same distance as the sandwich panels by struts leaving in the angle an empty space provided for receiving a post and having an insulating material between the plates.

6. Structure in accordance with one of the claims 1 to 5, **characterized in that** the posts and the crosspieces have a square or rectangular section and **in that** the distance of the struts from the edge of the plates is equal to half the side of the square or rectangular section of the crosspieces and posts and the interval between the plates is equal to the side of this square or rectangular section.

7. Structure in accordance with one of the claims 1 to 6, **characterized in that** the posts and crosspieces are in solid or glued laminated wood and the struts of the panels in hydrosilicate and conifer cellulose base material having a specific mass equal to or less than 350 kg/m3 identical to the one of the plates, in wood or in metal.

8. Structure in accordance with one of the claims 1 to 6, **characterized in that** the posts and crosspieces and/or ties are in metal, light reinforced concrete or plastic, for example polyvinyl chloride, and the struts of the panels are in wood or in hydrosilicate and conifer cellulose base material having a specific mass equal to or less than 350 kg/M3 identical to the one of the plates.

9. Structure in accordance with one of the claims 2 to 8, **characterized in that** it has the door and window frames having modular dimensions relative to the panels, the posts and the erosspieces, that is to say their width is a multiple of the width of the base panel.

10. Manufacturing process of a structure in accordance with one of the above claims, **characterized in that** a platform is built having a surface roughly smaller than the structure. A first angle part is placed on this platform, then two ledgers in the angle part that are fastened on the platform. Then a first post is placed having a height such that it is flush with the bottom of the groove provided in the angle of the angle part as well as both posts roughly of the same height in the spaces provided in the angle part. The two sandwich panels are placed on each side of the angle part in order to enclose the last two posts placed, which constitute the start of both walls. These last operations are repeated so that a row of panels is constituted until another angle of the structure or a post making up a door or window frame is reached. Then a first crosspiece is placed in the groove provided in the upper part of the sandwich panels constituting a first wall and the same thing is done for the second wall, both crosspieces being assembled using a part provided for this in the post placed in the angle of the angle part. Once the second row of sandwich panels is placed, the crosspieces and/or ties are tightened. All these operations will be repeated until the whole structure is completed.

11. Process in accordance with the claim **characterized in that** the platform is made of wood, concrete or metal.
